# EUROPEAN PATENT APPLICATION

(11) **EP 4 542 595 A1**
(43) Date of publication of application: **23.04.2025**
(21) Application number: 23859834.6
(22) Date of filing: 04.07.2023
(51) Int. Cl.: H01F 41/02, C21D 6/00, C22C 38/00, C22C 45/02, H01F 1/153, H02K 1/02

(54) **METHOD FOR MANUFACTURING LAYERED BODY OF IRON-BASED AMORPHOUS ALLOY**

(30) Priority: 02.09.2022 JP 2022139691
(71) Applicant: Next Core Technologies, Inc., Uji-shi, Kyoto 611-0033 (JP)
(72) Inventor: KANEKIYO, Hirokazu, Kyoto-shi, Kyoto 600-8813 (JP)
(74) Representative: Isarpatent
(86) International application number: PCT/JP2023/024743
(87) International publication number: WO 2024/048064

(57) **Abstract**

Disclosed is a method for manufacturing a laminated body by laminating a plurality of iron-based amorphous alloy thin strips, in which the iron-based amorphous alloy thin strip is expressed by a composition formula T_{100-x-y-z}Siₓ(B₁₋ₘCₘ)_{y}P_{z} (where, T is at least one element selected from the group consisting of Fe, Co, and Ni and is a transition metal element necessarily containing Fe), and a thickness of the composition is 30 µm or more and 60 µm or less. The method includes: a pretreatment step S1 of subjecting a plurality of the iron-based amorphous alloy thin strips to heat treatment at a temperature of 200°C or higher and lower than a crystallization temperature; an application step S2 of applying a thermosetting resin to at least one of a plurality of the iron-based amorphous alloy thin strips after the heat treatment to form an adhesive layer; and a thermocompression bonding step S3 of thermocompression-bonding a plurality of the iron-based amorphous alloy thin strips with the adhesive layer interposed therebetween to form the laminated body.

## Description

### Technical Field

The present invention relates to a method for manufacturing a laminated body of an iron-based amorphous alloy, and more particularly, to a method for manufacturing a laminated body of an iron-based amorphous alloy that can be suitably used for laminated cores of motors and generators.

### Background Art

In recent years, iron-based amorphous alloy materials, containing iron (Fe), boron (B), and silicon (Si) as main raw materials, are known for use in various passive elements and transformers, such as inductors and reactors, which are used as electronic components. An Fe-Si-B-based rapidly solidified alloy thin strip, having a thickness of about 17 µm to 22 µm and prepared by a molten metal rapid solidification method using such a soft magnetic material, is used as a winding core in a large transformer for power transmission, a rectifier inductor, or the like. The demand for the Fe-Si-B-based rapidly solidified alloy thin strip is increasing year by year as an alternative to the conventional silicon steel sheet (Fe-Si).

In addition, the iron-based amorphous alloy has a lower iron loss than the silicon steel sheet, and hence it has been studied to increase motor efficiency by applying the iron-based amorphous alloy to a rotor core and a stator core of a brushless direct current (BLDC) motor. In particular, in the case of application to a high-speed rotating BLDC motor exceeding 10,000rpm, it has been confirmed that the operating range of the soft magnetic material becomes a high frequency band of 1 kHz or more and high efficiency is more remarkable in a several hundred W-class motor. Therefore, for example, development to white goods such as air conditioner compressors and rechargeable vacuum cleaners, auxiliary motors for electrical systems, and the like is expected.

A drive motor for EVs, which is required to have higher efficiency than the motor for the white goods, is also transitioning to a high-speed rotating BLDC motor having a rotation speed of 10,000 rpm or more (e.g., about 20,000 rpm) due to market demands for miniaturization, higher torque, and higher efficiency. For this reason, an iron-based silicon-boron amorphous alloy has been studied as a soft magnetic material that is assumed to have an operating range of 1 to 2 kHz when used as a motor core.

The iron-based silicon-boron amorphous alloy can reduce an iron loss to about 1/10 compared to the silicon steel sheet, has a high magnetic permeability, and has a high Bs (saturation magnetic flux density) to some extent, and hence it has recently attracted attention as a next-generation high-performance soft magnetic material. However, the thickness of the iron-based silicon-boron amorphous alloy is generally about 17 to 25 µm, which is significantly smaller than the thickness of the silicon steel sheet having a thickness of about 250 to 350 µm, making it difficult to perform punch processing for manufacturing the laminated core and the like. Therefore, it is challenging to maintain good properties while increasing the iron-based silicon-boron amorphous alloy to be manufactured.

For example, Non-Patent Literature 1 discloses that an iron-based amorphous alloy thin strip, having a thickness of 50 µm or more, can be obtained by adding phosphorus (P) to reduce a rapid solidification rate. However, a phosphorus-added alloy not only causes a decrease in Bs by adding phosphorus, but also makes a phosphorus component volatilize during the melting of the alloy, leading to a significant contamination inside and outside molten metal rapid cooling equipment. Moreover, it may be likely to burn, and hence there are still few application examples in industrial fields.

Patent Literatures 1 to 3 disclose a method for manufacturing an amorphous alloy thin strip, having a sheet thickness (e.g., about 50 µm) to an extent where punch processing is possible, by a multi-slit method in which a molten alloy is discharged onto a rotating cooling roll from a plurality of slit nozzles. However, even if such a technique is used, there is a limit on increasing the thickness, making it difficult to apply the amorphous alloy thin strip as a soft magnetic material for the laminated core instead of the silicon steel sheet.

Patent Literature 4 discloses a method for manufacturing a metal thin strip that suppresses, when a wide rapidly cooled thin strip is prepared, the thickness of the metal thin strip from becoming uneven by using a porous nozzle. The invention of Patent Literature 4 is characterized by the shape of the nozzle opening, but there is a problem that nozzle processing cost increases due to difficulty in processing, making it difficult to use the invention at a mass production level.

Patent Literature 5 discloses a method for manufacturing an iron-based silicon-boron amorphous alloy, which aims to increase the thickness using a molten metal nozzle having a staggered multi-orifice. However, when compared to the silicon steel sheet, there is room for further improvement in ensuring a sufficient thickness.

As described above, it is conventionally difficult to increase the thickness of an amorphous alloy thin strip itself, and hence Patent Literature 6 discloses a method for manufacturing a laminated body whose thickness is increased by laminating a plurality of soft magnetic alloy thin strips.

### Citation List

### Patent Literature

Patent Literature 1: JP H5-329587 A
Patent Literature 2: JP H7-113151 A
Patent Literature 3: JP H8-124731 A
Patent Literature 4: JP S63-220950 A
Patent Literature 5: JP 2018-153828 A
Patent Literature 6: JP 2021-154732 A

### Non-Patent Literature

Non-Patent Literature 1: Creation of a novel bulk metallic glass/amorphous thick plate having a high saturation magnetic flux density (General Research Center for Metallic Glass, TOHOKU University) by Akihiro MAKINO, Ken KUBOTA, and Joshunto

### Summary of Invention

### Technical Problem

In the method for manufacturing a laminated body of soft magnetic alloy thin strips disclosed in Patent Literature 6, a thermosetting resin is applied to at least one of the plurality of soft magnetic alloy thin strips; these strips are attached to each other; and then they are heated and bonded at a predetermined temperature to form a laminated body, which is wound into a coil shape. When the laminated core is manufactured from the laminated body obtained by this manufacturing method, the laminated body is unwound from the wound state; a plurality of core pieces are punched by performing punch processing; and then each core piece is swaged and laminated.

In the method for manufacturing a laminated body of soft magnetic alloy thin strips disclosed in Patent Literature 6, the soft magnetic alloy thin strip may be either an amorphous alloy thin strip or a nanocrystalline alloy thin strip obtained by subjecting an amorphous alloy thin strip to heat treatment. However, this heat treatment condition has a large impact on the magnetic permeability and the like of the soft magnetic alloy thin strip, and hence there is room for consideration in ensuring good soft magnetic properties.

In addition, in the method for manufacturing a laminated body of soft magnetic alloy thin strips disclosed in Patent Literature 6, when the laminated body after manufactured is wound into a coil shape, a misalignment is likely to occur between the plurality of soft magnetic alloy thin strips constituting the laminated body, and there is a risk that a part of the soft magnetic alloy thin strips may be peeled off. For this reason, the properties of the laminated core manufactured by unwinding the laminated body are likely to vary, and hence there is a risk that sufficient quality may not be obtained.

In order to achieve high efficiency of a high-speed rotating motor, such as a drive motor for next-generation EVs, which is designed to be driven at high-speed rotation of 10,000 rpm to 20,000 rpm, a lower iron loss and a higher magnetic permeability than those of a silicon steel sheet that is an existing core material are required. Specifically, soft magnetic properties, in which Bs ≥ 1.5 T, magnetic permeability ≥ 3,000, and iron loss ≤ 30 W/kg (at Bm: 1.0 T, 1 kHz), are required. Furthermore, an iron-based amorphous alloy, having a thickness at which a laminated core can be manufactured by punch processing at a level of efficiency comparable to that of a silicon steel sheet while ensuring such good soft magnetic properties, is earnestly desired mainly in the automobile industry as a core material for BLDC motors for driving EVs.

Therefore, an object of the present invention is to provide a method for manufacturing a laminated body of an iron-based amorphous alloy in which punch processing can be easily performed while good soft magnetic properties are ensured. Solution to Problem

The object of the present invention is to provide a method for manufacturing a laminated body by laminating a plurality of iron-based amorphous alloy thin strips. The iron-based amorphous alloy thin strip has a composition expressed by a composition formula T_{100-x-y-z}Siₓ(B₁₋ₘCₘ)_{y}P_{z} (where, T is at least one element selected from the group consisting of Fe, Co, and Ni and is a transition metal element necessarily containing Fe) in which composition ratios x, y, z, and m satisfy 2.5 ≤ x ≤ 7.0 atom%, 13.0 ≤ y ≤ 16.0 atom%, 0.0 ≤ z ≤ 2.0 atom%, and 0.0 ≤ m ≤ 0.3, respectively, and a thickness of the composition is 30 µm or more and 60 µm or less. The iron-based amorphous alloy thin strip can be achieved by a method for manufacturing a laminated body of iron-based amorphous alloy thin strips, the method including: a pretreatment step of subjecting a plurality of the iron-based amorphous alloy thin strips to heat treatment at a temperature of 200°C or higher and lower than a crystallization temperature; an application step of applying a thermosetting resin to at least one of a plurality of the iron-based amorphous alloy thin strips after the heat treatment to form an adhesive layer; and a thermocompression bonding step of thermocompression-bonding a plurality of the iron-based amorphous alloy thin strips with the adhesive layer interposed therebetween to form the laminated body.

In the pretreatment step, the heat treatment is preferably performed for a heat treatment time of 0.01 seconds or more and 2 hours or less.

In the pretreatment step, the heat treatment is preferably performed in a state in which a plurality of the iron-based amorphous alloy thin strips are stacked on and brought into close contact with each other. In the application step, the adhesive layer is preferably formed by separating a plurality of the stacked iron-based amorphous alloy thin strips from each other.

It is preferable to further include a punching step of conveying the laminated body of the iron-based amorphous alloy thin strips obtained in the thermocompression bonding step to a punching press machine without winding the laminated body, and punching the laminated body into a predetermined shape by the punching press machine to form a punched piece.

In the thermocompression bonding step, thermocompression bonding is performed by holding the iron-based amorphous alloy thin strips at a temperature of 120°C or higher and lower than 400°C for 1 second or more and less than 60 seconds, and the thickness of the laminated body of the iron-based amorphous alloy thin strips is preferably 80 µm or more and 400 µm or less.

In the thermocompression bonding step, the pressure, when thermocompression bonding is performed by holding the iron-based amorphous alloy thin strips at a temperature of 120°C or higher and lower than 400°C for 1 second or more and less than 60 seconds, is fine to be 30 N or more and 1 kN or less per cm², preferable to be 100 N or more and 700 N or less, and more preferable to be 100 N or more and less than 400 N. As a result, when the laminated body, including the iron-based amorphous alloy thin strips, is subjected to the punch processing, good adhesion, without delamination between the laminated bodies, can be easily ensured.

The iron-based amorphous alloy thin strip that has undergone the pretreatment step preferably has a Bs of 1.5 T or more, a magnetic permeability of 3,000 or more, and an iron loss of 30 W/kg or less at Bm = 1.0 T and a frequency of 1 kHz.

### Advantageous Effects of Invention

According to the method for manufacturing a laminated body of an iron-based amorphous alloy of the present invention, punch processing can be easily performed while good soft magnetic properties are ensured, and hence, for example, the method can be suitably used for manufacturing a core material for BLDC motors for driving EVs.

### Brief Description of Drawings

FIG. 1 is a flowchart for explaining a method for manufacturing a laminated body of an iron-based amorphous alloy according to an embodiment of the present invention.
FIG. 2 is a schematic process view illustrating the method for manufacturing a laminated body of an iron-based amorphous alloy according to the embodiment of the present invention.
FIG. 3 is a schematic process view illustrating a method for manufacturing a laminated body of an iron-based amorphous alloy according to another embodiment of the present invention.
FIG. 4 is a schematic process view illustrating a method for manufacturing a laminated body of an iron-based amorphous alloy according to still another embodiment of the present invention.

### Description of Embodiments

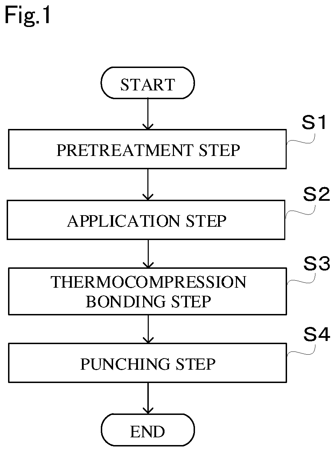

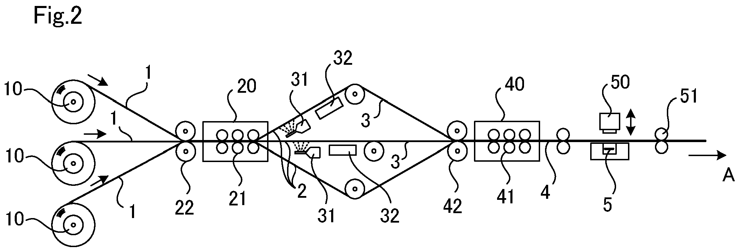

Hereinafter, embodiments of the present invention will be described with reference to the accompanying drawings. FIG. 1 is a flowchart for explaining a method for manufacturing a laminated body of an iron-based amorphous alloy according to an embodiment of the present invention. As illustrated in FIG. 1, the method for manufacturing a laminated body of an iron-based amorphous alloy of the present embodiment includes a pretreatment step S1 of subjecting a plurality of iron-based amorphous alloy thin strips to heat treatment, an application step S2 of forming an adhesive layer on the iron-based amorphous alloy thin strip after the heat treatment, a thermocompression bonding step S3 of attaching and thermocompression-bonding a plurality of the iron-based amorphous alloy thin strips with the adhesive layer interposed therebetween, and a punching step S4 of punching a laminated body obtained by thermocompression bonding into a predetermined shape to form a punched piece. Hereinafter, each of the steps S1 to S4 will be described with reference to a schematic process view illustrated in FIG. 2.

### <S1: Pretreatment step>

As the iron-based amorphous alloy thin strip, one, which is formed in a thin strip shape by a single-roll melt spinning method in which a molten alloy is rapidly cooled and solidified by contact with a cooling roll as disclosed in Patent Literature 5 described above, can be preferably used. In the pretreatment step S1, a plurality of (three in the present embodiment) iron-based amorphous alloy thin strips 1 are each unwound from a state of being wound around a delivery roll 10; conveyed to a pretreatment thermostatic bath 20; and subjected to heat treatment in the pretreatment thermostatic bath 20, as illustrated in FIG. 2.

As the iron-based amorphous alloy thin strip 1, one, the composition formula of which is expressed by T_{100-x-y-z}Siₓ(B₁₋ₘCₘ)_{y}P_{z} (where, T is at least one element selected from the group consisting of Fe, Co, and Ni and is a transition metal element necessarily containing Fe) in which composition ratios x, y, z, and m satisfy 2.5 ≤ x ≤ 7.0 atom%, 13.0 ≤ y ≤ 16.0 atom%, 0.0 ≤ z ≤ 2.0 atom%, and 0.0 ≤ m ≤ 0.3, respectively, is used to obtain good soft magnetic properties.

If the thickness of the iron-based amorphous alloy thin strip 1 is too small, the number of laminated layers for forming the laminated body is increased, which may cause an increase in manufacturing cost. On the other hand, if the thickness is too large, it is difficult to manufacture the iron-based amorphous alloy thin strip 1. Therefore, the thickness is 30 µm or more and 60 µm or less. The width of the iron-based amorphous alloy thin strip 1 is not particularly limited, but when it is assumed that the iron-based amorphous alloy thin strip 1 is used as a motor core, the width is, for example, 10 to 200 mm.

If the heat treatment temperature in the pretreatment step S1 is raised, as before, to a temperature at which a cluster that is a precursor of a crystalline phase or a nano-order crystal, where the cluster has crystallized into a crystalline phase, crystallizes out in the iron-based amorphous alloy, the magnetic permeability decreases and it becomes difficult to obtain desired soft magnetic properties. Therefore, the heat treatment temperature is set to be equal to or lower than the crystallization temperature of the iron-based amorphous alloy. The crystallization temperature is a temperature (inflection point) at which heat generation by the crystallization of the iron-based amorphous alloy starts, and can be measured with a differential scanning calorimeter (DSC), a differential thermal analyzer (DTA), or the like. The specific crystallization temperature varies depending on an alloy composition or the like, and is, for example, 350 to 500°C.

On the other hand, if the heat treatment temperature in the pretreatment step S1 is too low, the soft magnetic properties of the iron-based amorphous alloy thin strip 1 are not improved, and hence the heat treatment temperature is set to 200°C or higher. The heat treatment temperature in the pretreatment step S1 is preferably 240 to 280°C. As described above, when the heat treatment temperature in the pretreatment step S1 is set to be lower than before, the iron-based amorphous alloy thin strip 1 is cooled in a short time, and the application step S2 of the next step can be started earlier. Therefore, the conveyance distance of the iron-based amorphous alloy thin strip 1 until the next step is performed can be shortened or the conveyance speed can be increased, enabling manufacturing efficiency to be increased. When the thickness of the iron-based amorphous alloy thin strip 1 is relatively large (30 µm or more and 60 µm or less), the heat treatment temperature in the pretreatment step S1 is important for obtaining good soft magnetic properties.

The heat treatment in the pretreatment step S1 may be performed instantaneously, and when the heat treatment time is shortened, the pretreatment thermostatic bath 20 can be miniaturized. Specifically, the heat treatment time is preferably 0.01 seconds or more. The upper limit of the heat treatment time is not particularly present, but if it is too long, manufacturing efficiency significantly decreases, and hence it is, for example, 2 hours or less.

The pretreatment step S1 is preferably performed in a state in which a plurality of the iron-based amorphous alloy thin strips 1 are stacked on each other and brought into close contact with each other by pressuring rolls 21 and 22, whereby the heat treatment of each iron-based amorphous alloy thin strips 1 can be efficiently performed in a space-saving manner.

An iron-based amorphous alloy thin strip 2 after the heat treatment in the pretreatment step S1 can easily realize soft magnetic properties that can be applied to a laminated core for compact and highly-efficient BLDC motors for driving EVs, in which Bs is 1.4 T or more, a magnetic permeability is 3,000 or more, and an iron loss is 30 W/kg or less at Bm = 1.0 T and a frequency of 1 kHz.

### <S2: Application step>

The iron-based amorphous alloy thin strips 2 after the heat treatment are discharged from the pretreatment thermostatic bath 20 in a state in which a plurality of them are stacked on each other. In the application step S2, after the respective iron-based amorphous alloy thin strips 2 are separated, an adhesive is applied by application equipment 31 to one or both joint surfaces of each of a plurality of the iron-based amorphous alloy thin strips 2 when they are laminated again. The application equipment 31 of the present embodiment is a spray type, but a roll coater, a curtain coater, a dispenser, or the like may be used. The adhesive includes a thermosetting resin, and an epoxy resin is used in the present embodiment, but a polyester resin, a polyimide resin, a polyurethane resin, or the like may be used. The application of the adhesive to the iron-based amorphous alloy thin strip 2 after the heat treatment is preferably performed uniformly over the entire joint surface. The film thickness of the adhesive is, for example, 0.1 µm to 20 µm.

The adhesive applied to the iron-based amorphous alloy thin strip 2 after the heat treatment is dried by drying equipment 32, such as a heater, in the process of being conveyed toward a thermocompression bonding thermostatic bath 40 where the thermocompression bonding step S3 of the next step is performed. In this way, an adhesive layer 3 is formed on the joint surface of the iron-based amorphous alloy thin strip 2.

### <S3: Thermocompression bonding step>

In the thermocompression bonding step S3, the respective iron-based amorphous alloy thin strips 2 after the heat treatment are attached to each other with the adhesive layer 3 interposed therebetween by pressuring rolls 41 and 42, and thermocompression-bonded in the thermocompression bonding thermostatic bath 40, thereby forming a laminated body 4 of the iron-based amorphous alloy thin strips 2. If the heating temperature of the laminated body 4 in the thermocompression bonding step S3 is too low, a sufficient adhesive force is not obtained due to insufficient curing of the adhesive layer 3, whereas if the heating temperature is too high, there is a risk that the adhesive strength between the iron-based amorphous alloy thin strips 2 after the curing of the adhesive layer 3 may be decreased. So, in the punching step S4 of the next step, delamination between the iron-based amorphous alloy thin strips 2 constituting the laminated body 4 is likely to occur. Therefore, in order to ensure good adhesion between the iron-based amorphous alloy thin strips 2, the temperature of the inside of the thermocompression bonding thermostatic bath 40 is set preferably to 120°C or higher and lower than 400°C, and more preferably to 150°C or higher and lower than 350°C. The heating time for which the laminated body 4 is held in the thermocompression bonding thermostatic bath 40 is fine to be 1 second or more and less than 2 hours, preferable to be 5 seconds or more and less than 1 hour, and more preferable to be 7 seconds or more and less than 30 minutes.

The thermocompression bonding pressure in the thermocompression bonding step S3 is preferably 30 N or more and 1 kN or less per cm². If the thermocompression bonding pressure is lower than 30 N, adhesion between the iron-based amorphous alloy thin strips 2 bonded together cannot be sufficiently ensured. On the other hand, if the thermocompression bonding pressure exceeds 1 kN, distortion occurs inside the iron-based amorphous alloy thin strip 2, and soft magnetic properties are deteriorated. In consideration of the balance between adhesion strength and soft magnetic properties, the thermocompression bonding pressure is preferably 100 N or more and 700 N or less per cm², and more preferably 100 N or more and less than 400 N.

The thickness of the laminated body 4 of the iron-based amorphous alloy thin strips 2 formed in the thermocompression bonding step S3 is preferably such a thickness that punch processing can be performed with the same level of efficiency as that of the conventional silicon steel sheet. Specifically, the thickness of the laminated body 4 is preferably 80 µm or more and 400 µm or less, and more preferably 100 µm or more and 300 µm or less. The thickness of each iron-based amorphous alloy thin strip 2 and the number of laminated layers can be appropriately set in consideration of the required thickness of the laminated body 4.

### <S4: Punching step>

The laminated body 4 of the iron-based amorphous alloy thin strips 2 formed in the thermocompression bonding step S3 is conveyed to a punching press machine 50, and a punching step S4 is performed by the punching press machine 50. In the punching step S4, the laminated body 4 is sandwiched between the upper and lower dies of the punching press machine 50, and punched into a predetermined shape, thereby continuously forming punched pieces 5 such as a stator core sheet material. A tension roller 51 is provided on the downstream side, in the conveyance direction, of the punching press machine 50, and the laminated body 4 can be punched in a state in which tension in the direction of an arrow A is applied to the laminated body 4 by driving the tension roller 51.

As described above, the laminated body 4 of the iron-based amorphous alloy thin strips 2 obtained in the thermocompression bonding step S3 is conveyed, without being wound, to the punching press machine 50 to perform the punching step S4. So, there is no risk that a problem, such as a misalignment or peeling of the iron-based amorphous alloy thin strip 2 associated with winding of the laminated body 4, may occur, thereby enabling a high-quality punched piece 5 to be efficiently manufactured. Note that the laminated body 4, from which the punched pieces 5 have been punched, is wound or cut to an appropriate length, which can be melted and reused.

According to the method for manufacturing a laminated body of iron-based amorphous alloy thin strips of the present embodiment, the laminated body 4 of an iron-based amorphous alloy 2 can be obtained, on which punch processing can be easily performed while good soft magnetic properties are ensured.

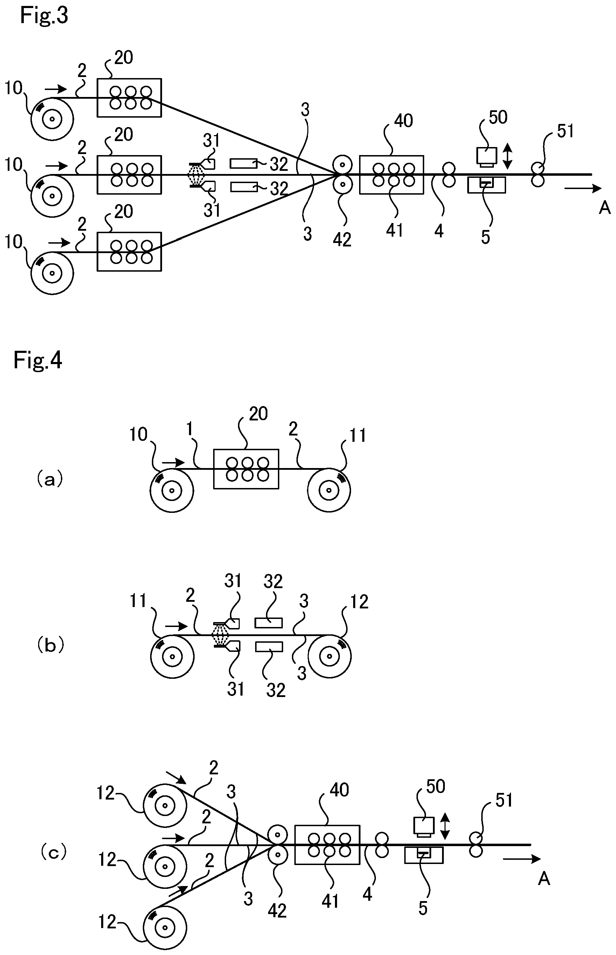

Although one embodiment of the present invention has been described in detail above, specific aspects of the present invention are not limited to the above embodiment. For example, in the pretreatment step S1 of the present embodiment, the heat treatment is performed in a state in which a plurality of the iron-based amorphous alloy thin strips 1 are stacked on and brought into close contact with each other. But, as illustrated in FIG. 3, the iron-based amorphous alloy thin strip 1 unwound from each delivery roll 10 may be individually conveyed to the pretreatment thermostatic bath 20 to perform the heat treatment.

In the present embodiment, the pretreatment step S1, the application step S2, the thermocompression bonding step S3, and the punching step S4 are performed as a series of steps, but each step may be divided. For example, the iron-based amorphous alloy thin strip 1 unwound from the delivery roll 10 is conveyed to the pretreatment thermostatic bath 20 to perform the pretreatment step S1, and the iron-based amorphous alloy thin strip 2 after the heat treatment is wound around a first winding roll 11, as illustrated in FIG. 4(a). Next, the application step S2, in which the adhesive layer 3 is formed on both surfaces of the iron-based amorphous alloy thin strip 2 unwound from the first winding roll 11 by the application equipment 31 and the drying equipment 32, is performed, and then the iron-based amorphous alloy thin strip 2 is wound around a second winding roll 11, as illustrated in FIG. 4(b). In this way, a plurality of the second winding rolls 11, around each of which the iron-based amorphous alloy thin strip 2 is wound, are formed, and then the iron-based amorphous alloy thin strips 2 are unwound from these second winding rolls 11 and stacked by the pressing rolls 41 and 42; conveyed to the thermocompression bonding thermostatic bath 40; and subjected to the thermocompression bonding step S3, as illustrated in FIG. 4(c). Then, the laminated body 4 formed in the thermocompression bonding step S3 is conveyed to the punching press machine 50 to perform the punching step S4, thereby forming the punched piece 5. As described above, by appropriately dividing the respective steps S1 to S4, the laminated body 4 and the punched piece 5 can be manufactured by effectively utilizing a vacant space at the site.

Hereinafter, the present invention will be described in more detail based on Examples of the present invention and Comparative Examples. However, the present invention is not limited to the following Examples.

### (Examples)

200 kg of a raw material, having a purity of 99.5% or more and having each element of B, C, Si, P, and Fe blended to obtain each alloy composition shown in Examples 1 to 6 in Table 1 below, was put into an alumina crucible and dissolved by high-frequency induction heating, thereby forming a molten alloy. 50 kg of the molten alloy was poured into an alumina hot water storage tank having an inner diameter of 200 mm and a height of 400 mm, the alumina hot water storage tank having, in its lower part, a BN hot water outlet nozzle provided with a slit having a width of 0.5 mm and a length of 40 mm. A quenching roll, made of a copper alloy and having a diameter of 1000 mm and a width of 200 mm, was disposed immediately below the hot water outlet nozzle with a gap of 0.4 mm, and the quenching roll was rotated at a surface speed of 25 m/sec to deliver the molten alloy from the hot water outlet nozzle to the outer peripheral surface. Through this, the molten metal was super-rapidly cooled, thereby preparing an iron-based amorphous alloy thin strip having an amorphous alloy structure of 90 vol% or more. The thicknesses of the prepared iron-based amorphous alloy thin strips are shown in Table 1. The injection pressure of the molten alloy to be delivered from the hot water outlet nozzle was set to 30 kPa, and the amount of cooling water to be supplied to the inner wall of the quenching roll was set to 300 L/min.

The obtained iron-based amorphous alloy thin strip was subjected to heat treatment as a pretreatment at a crystallization temperature or lower while being continuously conveyed in the atmosphere by a mesh belt furnace. The heat treatment temperature and the heat treatment time at that time are shown in Table 1.

Next, a plurality of the iron-based amorphous alloy thin strips, having been subjected to the heat treatment as a pretreatment, are stacked on each other, thereby preparing a laminated body of the iron-based amorphous alloy thin strips. In preparing the laminated body, a thermosetting resin was uniformly applied to the joint surface of the iron-based amorphous alloy thin strip so as to have a thickness of about several µm or less; then continuously inserted into a tunnel furnace in a state of being sandwiched between pressing rolls; and subjected to thermocompression bonding treatment in the atmosphere. The number of laminated layers, the thermocompression bonding temperature, the thermocompression bonding time, the thermocompression bonding force, and the thickness of the obtained laminated body are shown in Table 2.

The soft magnetic properties (saturation magnetic flux density Bs, relative magnetic permeability µr, and iron loss) of the obtained laminated body were evaluated, and then a punching test was performed by a punching press. The adhesiveness between the respective iron-based amorphous alloy thin strips after the punching was evaluated by classifying the adhesiveness into three types: ∘ when no peeling between the thin strips was observed, △ when a part of the thin strips was peeled, and × when the thin strips were completely peeled. The evaluation results are shown in Table 3 below.

### (Comparative examples)

A molten alloy was formed so as to have each alloy composition shown in Comparative Examples 7 to 11 in Table 1 below, and an iron-based amorphous alloy thin strip was prepared from the molten alloy. The preparation conditions of Comparative Examples 7 to 10 were the same as the preparation conditions of Examples 1 to 6 except that the size of the slit of the hot water outlet nozzle was set to 0.3 mm in width × 40 mm in length. On the other hand, the preparation conditions of Comparative Example 11 were the same as the preparation conditions of Examples 1 to 6, including the size of the slit of the hot water outlet nozzle.

Thereafter, the iron-based amorphous alloy thin strips of Comparative Examples 7, 10, and 11 were subjected to heat treatment as a pretreatment using a mesh belt furnace in the same manner as in Examples 1 to 6. The heat treatment temperature and the heat treatment time at that time are shown in Table 1. The heat treatment temperature of Comparative Example 11 was a temperature higher than the crystallization temperature of an iron-based amorphous alloy thin strip having an amorphous structure. On the other hand, the iron-based amorphous alloy thin strips of Comparative Examples 8 and 9 were not subjected to heat treatment as a pretreatment.

Next, laminated bodies of the iron-based amorphous alloy thin strips were prepared under the conditions shown in Table 2 in the same manner as in Examples 1 to 6; the soft magnetic properties (saturation magnetic flux density Bs, relative magnetic permeability µr, and iron loss) of the obtained laminated body were evaluated; then a punching test was performed by a punching press; and the adhesion between the respective iron-based amorphous alloy thin strips after the punching was evaluated. The evaluation results are shown in Table 3 below.

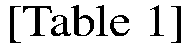

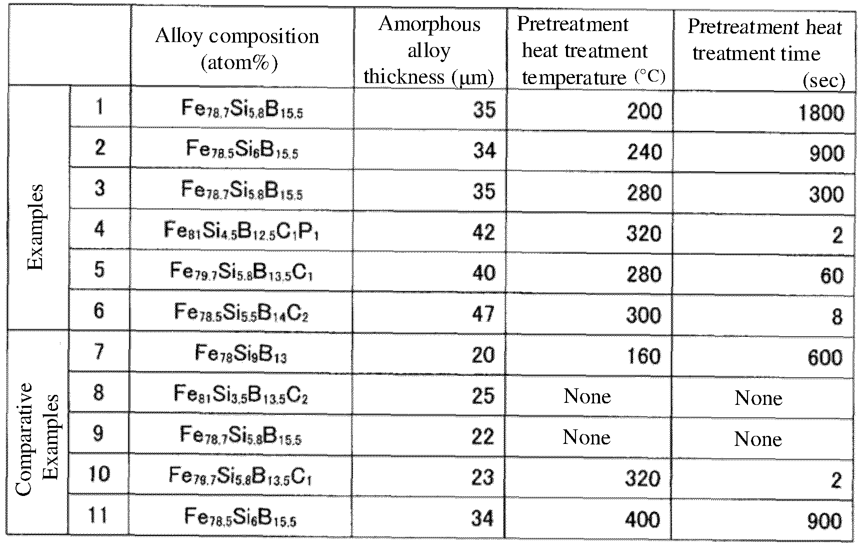

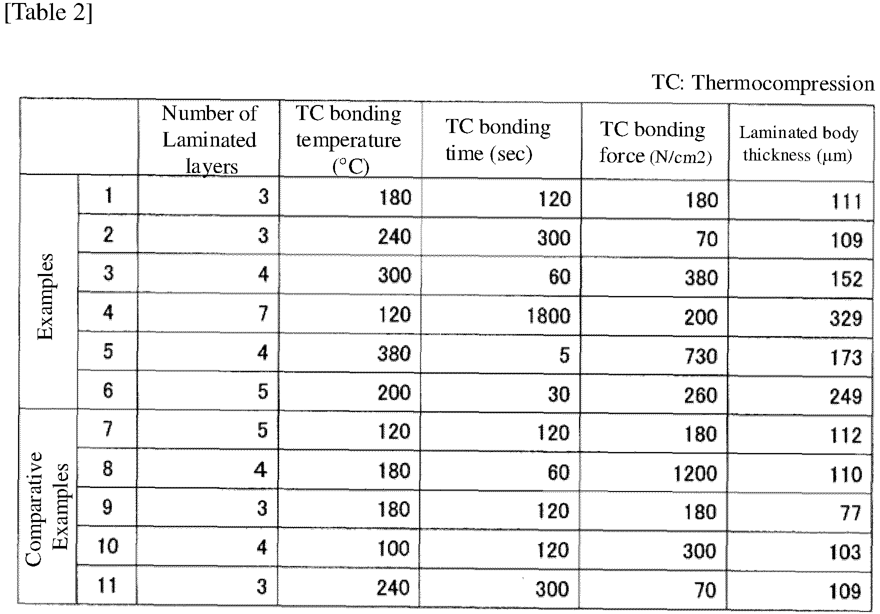

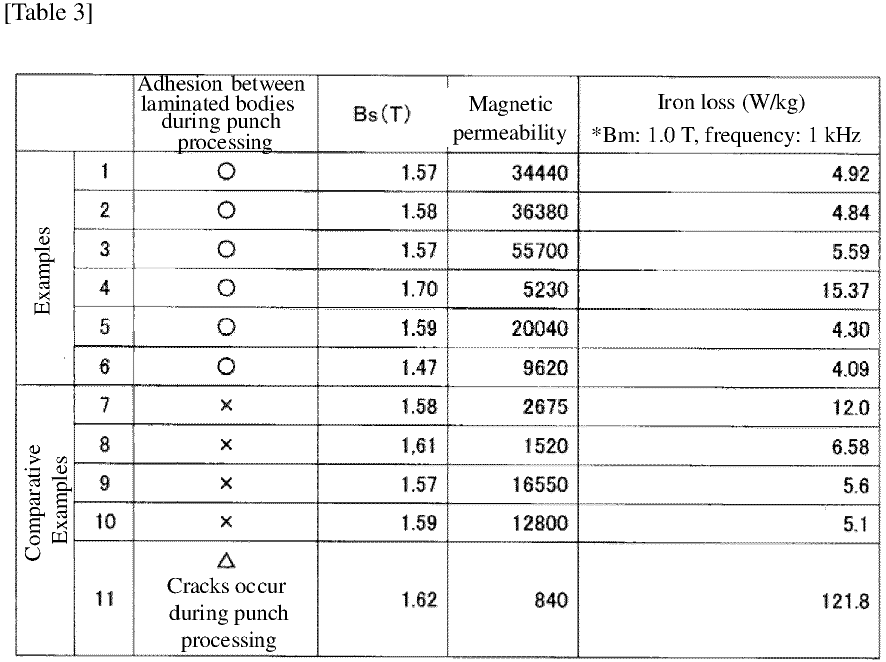

### Reference Signs List

- 1: iron-based amorphous alloy thin strip
- 2: iron-based amorphous alloy thin strip after heat treatment
- 3: adhesive layer
- 4: laminated body
- 5: punched piece
- 10: delivery roll
- 20: pretreatment thermostatic bath
- 21, 22: pressing roll
- 31: application equipment
- 32: drying equipment
- 40: thermocompression bonding thermostatic bath
- 41, 42: pressing roll
- 50: punching press machine
- S1: pretreatment step
- S2: application step
- S3: thermocompression bonding step
- S4: punching step

## Claims

1. A method for manufacturing a laminated body of iron-based amorphous alloy thin strips, the method being a method for manufacturing a laminated body by laminating a plurality of iron-based amorphous alloy thin strips, the iron-based amorphous alloy thin strip being expressed by a composition formula T_{100-x-y-z}Siₓ(B₁₋ₘCₘ)_{y}P_{z} (where, T is at least one element selected from the group consisting of Fe, Co, and Ni and is a transition metal element necessarily containing Fe) in which composition ratios x, y, z, and m satisfy 2.5 ≤ x ≤ 7.0 atom%, 13.0 ≤ y ≤ 16.0 atom%, 0.0 ≤ z ≤ 2.0 atom%, and 0.0 ≤ m ≤ 0.3, respectively, and a thickness of the composition is 30 µm or more and 60 µm or less, the method comprising:
a pretreatment step of subjecting a plurality of the iron-based amorphous alloy thin strips to heat treatment at a temperature of 200°C or higher and lower than a crystallization temperature;
an application step of applying a thermosetting resin to at least one of a plurality of the iron-based amorphous alloy thin strips after the heat treatment to form an adhesive layer; and
a thermocompression bonding step of thermocompression-bonding a plurality of the iron-based amorphous alloy thin strips with the adhesive layer interposed therebetween to form the laminated body.

2. The method for manufacturing a laminated body of iron-based amorphous alloy thin strips according to claim 1, wherein, in the pretreatment step, the heat treatment is performed for a heat treatment time of 0.01 seconds or more and 2 hours or less.

3. The method for manufacturing a laminated body of iron-based amorphous alloy thin strips according to claim 1, wherein
in the pretreatment step, the heat treatment is performed in a state in which a plurality of the iron-based amorphous alloy thin strips are stacked on and brought into close contact with each other, and
in the application step, the adhesive layer is formed by separating a plurality of the iron-based amorphous alloy thin strips stacked on each other.

4. The method for manufacturing a laminated body of iron-based amorphous alloy thin strips according to claim 1, further comprising a punching step of conveying the laminate of the iron-based amorphous alloy thin strips obtained in the thermocompression bonding step to a punching press machine without winding the laminated body, and punching the laminated body into a predetermined shape by the punching press machine to form a punched piece.

5. The method for manufacturing a laminated body of iron-based amorphous alloy thin strips according to claim 1, wherein, in the thermocompression bonding step, thermocompression bonding is performed by holding the iron-based amorphous alloy thin strips at a temperature of 120°C or higher and lower than 400°C for 1 second or more and less than 2 hours, and a thickness of the laminated body of the iron-based amorphous alloy thin strips is 80 µm or more and 400 µm or less.

6. The method for manufacturing a laminated body of iron-based amorphous alloy thin strips according to claim 1, wherein a pressure bonding force in the thermocompression bonding step is 30 N or more and 1 kN or less per cm².

7. The method for manufacturing a laminated body of iron-based amorphous alloy thin strips according to claim 1, wherein the iron-based amorphous alloy thin strip that has undergone the pretreatment step has a Bs of 1.4 T or more, a magnetic permeability of 3,000 or more, and an iron loss of 30 W/kg or less at Bm=1.0 T and a frequency of 1 kHz.
